# EUROPÄISCHE PATENTANMELDUNG

(11) **EP 0 869 085 A1**
(43) Veröffentlichungstag der Anmeldung: **07.10.1998**
(21) Anmeldenummer: 97113548.8
(22) Anmeldetag: 06.08.1997
(51) Int. Cl.: B65G 15/02, B65G 23/22

(54) **Antriebstrommel für Gurtförderer**

(30) Priorität: 02.04.1997 DE 29705835 U
(71) Anmelder: TRANSNORM SYSTEM GmbH, 31177 Harsum (DE)
(72) Erfinder: Warnecke, Karl, 31079 Sibbesse (DE)
(74) Vertreter: Arendt, Helmut, Dipl.-Ing.

(57) **Zusammenfassung**

Zum Antrieb eines Fördergurtes ist eine Antriebstrommel (3) vorgesehen, deren Einsatz sperrige Lageraufbauten zu beiden Seiten des Fördergurtes entbehrlich macht. Zu diesem Zweck sind die Trommeltraglager (19,20) innerhalb der Antriebstrommel (3) angeordnet.

## Beschreibung

Die Erfindung betrifft eine Antriebstrommel für einen Gurtförderer, insbesondere für den Kopf antrieb einer Gurtkurve.

Die Lagerung einer Antriebstrommel, insbesondere konischer Ausführung für eine Gurtkurve, erforderte die Unterbringung der Lagerteile in sperrigen Aufbauten an beiden Seiten der Gurtabtragung. Vor allem bei Kurvenabschnitten wurde dadurch der Transport von Fördergut, insbesondere von sperrigen Teilen, erschwert. Stückgut durfte seitlich nicht über die Gurtkante hinausreichen. Der Anschluß eines Folgeförderers für eine Gurtkurve wurde durch die Lageraufbauten ebenfalls behindert. Teilweise war es erforderlich, den Folgeförderer zwischen die seitlichen Lageraufbauten zu schieben, wodurch ein Teil der Förderbreite des sich anschließenden schmaleren Fördergurtes verlorenging.

Der Erfindung liegt die Aufgabe zugrunde, einen Fördergurtantrieb zu schaffen, dessen Einsatz sperrige Lageraufbauten zu beiden Seiten des Fördergurtes entbehrlich macht und Fördergut nicht behindert. Die Erfindung löst diese Aufgabe dadurch, daß die Trommeltraglager innerhalb der Antriebstrommel angeordnet sind.

Vorzugsweise werden die Trommeltraglager von einer Achse getragen, die mit einem Ende in einer am Gerüst des Gurtförderers befestigten Tragschale ruht und nahezu mit ihrer gesamten übrigen Länge in den als Hohlzylinder ausgebildeten Trommelkern reicht, an welchem die Antriebswelle ansetzt und in einem am Gerüst des Förderers befestigten Lager drehbar gelagert ist.

Die Trommeltraglager sind damit völlig in die Trommel hineinverlagert, so daß störende Lageraufbauten an beiden Seiten des Fördergurtes entfallen können. Die Antriebstrommel ist für den Anschluß eines Folgegurtes frei zugänglich. Insbesondere dadurch wird die Anbringung einer Justier- und Fixiereinrichtung für die Trommelachse für die horizontale und vertikale Ausrichtung der Antriebstrommel vereinfacht. Vorzugsweise wird die präzise Justierung der Trommel durch eine Verstellbarkeit der Tragschale, in welcher das äußere Ende der Trommelachse ruht, ermöglicht. Zum Ausgleich für die vertikale und horizontale Verstellung der Tragschale ist das Antriebswellenlager mit sphärisch ausgebildeten Teilen versehen, um die nötige Winkelbeweglichkeit zu erreichen.

Die Montage und Demontage der Antriebstrommel wird durch die Erfindung ebenfalls begünstigt. Das äußere Ende der Trommelachse ist einfach aus der Tragschale heraushebbar. Die Trommel mit der Antriebswelle ist entsprechend einfach aus dem Antriebswellenlager herausziehbar.

Um die Parallelität der Läuferachse des Antriebsmotors mit der Trommelachse jederzeit gewährleisten zu können, ist vorzugsweise der Motor an einer Traverse unterhalb der Trommel angeordnet, und zwar mit einem Ende fest an dem Profil, an dem auch die Tragschale befestigt ist, während das gegenüberliegende Ende drehbeweglich am Gerüst der Fördereinrichtung anschließt. Durch das gemeinsame tragende Profil für die Lagerschale und die Traverse wird bei Justierungen stets die gewünschte Parallelität zwischen diesen Elementen eingehalten.

Nach einem weiteren Merkmal zur vorteilhaften Gestaltung des Erfindungsgegenstandes ist der Antriebsmotor unterhalb der ihn tragenden Traverse an einer Platte befestigt, die um eine zur Trommelachse parallele Achse schwenkbar ist, wobei sich die Platte zwischen zwei zur Traverse senkrecht erstreckenden und mit dieser verbundenen Stirn- oder Seitenplatten gehalten wird. Diese können auch durch zwei geeignete parallele Haltearme ersetzt werden. Durch die kippbare Befestigung des Antriebsmotors an der Traverse kann das eingesetzte Transmissionselement, beispielsweise Antriebsriemen oder -kette, ohne eine Veränderung der Parallelität von Motorachse und Trommelachse ständig in einfachster Weise gespannt gehalten werden. Hierfür kann allein schon die Schwerkraft des Motors ausreichend sein.

Weitere den Erfindungsgegenstand vorteilhaft gestaltende Merkmale sind in den Ansprüchen angegeben.

In der Zeichnung ist ein Ausführungsbeispiel schematisch dargestellt und nachstehend erläutert. Es zeigen:

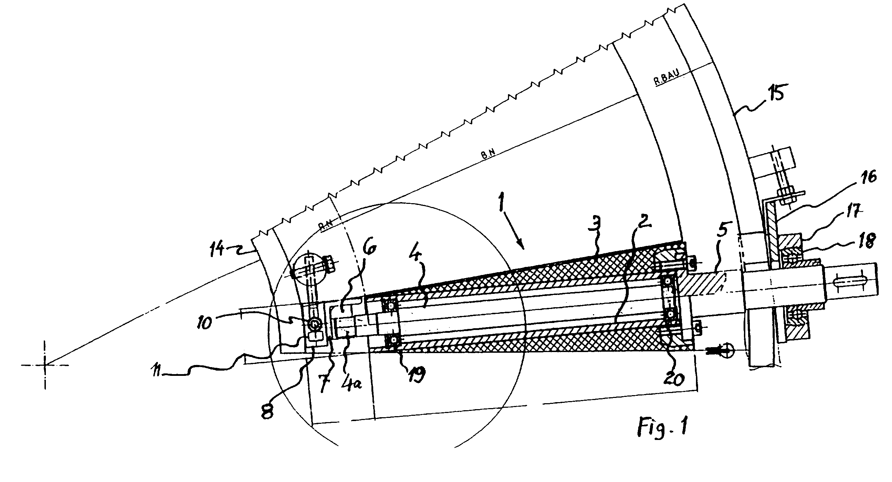

- Figur 1: die Draufsicht auf den Kopfantrieb einer Gurtkurve, z. T. im Schnitt,

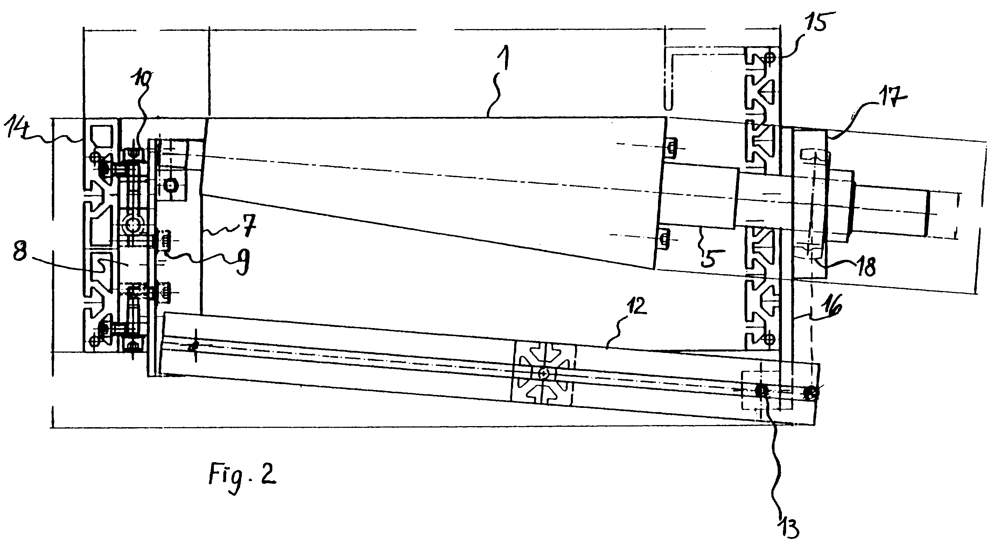

- Figur 2: die Seitenansicht der Trommelanordnung gemäß Figur 1 und

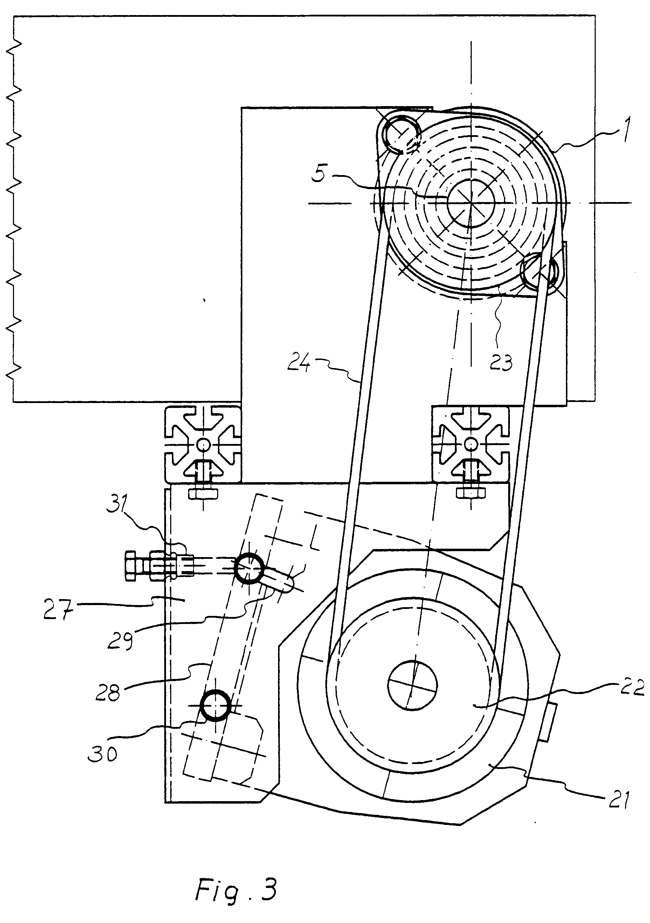

- Figur 3: die Stirnansicht der selbstspannenden Motorhalterung.

Die Bezugszeichen der für die Erfindung wesentlichsten Bauteile sind nachstehend tabellarisch aufgeführt, wobei für alle Figuren gleiche Teile mit den gleichen Bezugsziffern versehen sind:
- 1: Trommel
- 2: Trommelkern
- 3: Trommelmantel
- 4: Trommelachse
- 5: Trommelwelle
- 6: Tragschale
- 7: Winkelprofil
- 8: U-Profil
- 9: Befestigungsschraube für Vertikaleinstellung
- 10: Klemmschraube
- 11: Einstellschraube für horizontale Justierung
- 12: Traverse
- 13: Drehpunkt der Traverse
- 14: Gerüst am Innenradius
- 15: Gerüst am Außenradius
- 16: Tragplatte für Wellenlager und Traversendrehpunktbefestigung
- 17: Wellenlagerschale
- 18: Wälzlagerring, mit sphärisch ausgebildeter Außenfläche
- 19: Achslager am Innenradius
- 20: Achslager am Außenradius
- 21: Antriebsmotor
- 22: Kettenrad des Motors
- 23: Kettenrad der Antriebstrommel
- 24: Antriebskette
- 27: Stirn- oder Seitenbleche
- 28: Motorplatte
- 29: Langloch
- 30: Drehzapfen
- 31: Spannschraube

Das Drehmoment wird dem Trommelkern 2 über die Welle 5 mitgeteilt. Der Trommelkern ist hohlzylindrisch ausgeführt und über die Wälzlager 19 und 20 auf der ruhenden Achse 4 abgestützt. Das freie Ende der Achse 4 ruht in einer Tragschale 6, die an dem Winkelprofil 7 befestigt ist. Das Winkelprofil ist vertikal mit Hilfe eines nicht dargestellten Langlochs an dem U-Profil 8 einstellbar und mit Hilfe der Befestigungsschraube 9 fixierbar. Die horizontale Justierung wird über das U-förmige Profil 8, das seinerseits an dem Gerüst 14 befestigt ist, mit Hilfe der Einstellschraube 11 vorgenommen. Die Antriebswelle 5 ruht in einem winkelbeweglichen Wälzlager 18, dessen äußere Oberfläche sphärisch ausgebildet ist und von einer entsprechend gestalteten Öffnung einer Lagerschale 17 umfaßt ist.

Unterhalb der Antriebstrommel 1 befindet sich eine Traverse 12, die am Innenradius am Winkelprofil 7 befestigt und am Außenradius drehbeweglich an der Wellenlagertragplatte 16 befestigt ist. Der Drehpunkt ist mit 13 bezeichnet. Die Traverse 12 trägt den Antriebsmotor 21. Durch die Befestigung an der Traverse 12, deren Längsachse parallel zur Trommelachse gerichtet ist, erstreckt sich die Motorachse ebenfalls ständig parallel zur Trommelachse und hält diese Parallelität bei einer Verstellung der Trommelachse bei.

Die notwendige Spannung des Transmissionselements 24, beispielsweise Zahnriemen oder Kette, wird durch eine Spannvorrichtung erreicht, die aus einer drehbeweglichen Halterung des Motors an zwei Stirn- oder Seitenblechen 27 besteht, mit welchen eine Motorplatte 28 drehbeweglich verbunden ist. Über einen Drehzapfen 30 kann die Motorplatte 28 nach unten abkippen und wird dabei durch Langlöcher 29 in den Stirn- oder Seitenblechen geführt. Die durch die Schwerkraft des Motors selbsttätig erreichbare Ketten- oder Riemenspannung kann durch eine Justierschraube 31 erhöht werden, die auf die Rückseite der Motorplatte, mit der der Motor verschraubt ist, eine Anpreßkraft ausüben kann.

## Patentansprüche

1. Antriebstrommel für einen Gurtförderer, insbesondere für den Kopfantrieb einer Gurtkurve, dadurch gekennzeichnet, daß die Trommeltraglager (19, 20) innerhalb der Antriebstrommel (1) angeordnet sind.

2. Antriebstrommel nach Anspruch 1, dadurch gekennzeichnet, daß die Trommeltraglager auf einer Achse (4) angeordnet sind, die mit einem Endzapfen in einer am Gerüst (14) des Gurtförderers befestigten Tragschale (6) ruht und nahezu vollständig in den als Hohlzylinder ausgebildeten Trommelkern (2) reicht, an welchem die Antriebswelle (5) ansetzt und in einem am gegenüberliegenden Gerüst (15) des Gurtförderers befestigten Lager (18) drehbar gelagert ist.

3. Antriebstrommel nach Anspruch 1 oder 2, dadurch gekennzeichnet, daß die Tragschale (6) vertikal und horizontal verstellbar ausgebildet und das Antriebswellenlager (18) winkelbeweglich gestaltet ist.

4. Antriebstrommel nach einem der Ansprüche 1 bis 3, dadurch gekennzeichnet, daß das Antriebswellenlager sphärisch ausgebildete Lagerteile aufweist.

5. Antriebstrommel nach einem der Ansprüche 1 bis 4, dadurch gekennzeichnet, daß das äußere Achsende aus der offen gestalteten Tragschale heraushebbar ist.

6. Antriebstrommel nach einem der Ansprüche 1 bis 5, dadurch gekennzeichnet, daß die Tragschale von einem vertikal ausgerichteten Winkelprofil (7) getragen wird und dieses verstellbar mit einem am Gerüst (15) des Gurtförderers befestigten U-Profil (8) verbunden ist.

7. Antriebstrommel nach einem der Ansprüche 2 bis 6, dadurch gekennzeichnet, daß das Winkelprofil durch Langlöcher und Justierschrauben vertikal verstellbar am U-Profil und dieses horizontal verstellbar am Gerüst (15) befestigt ist.

8. Antriebstrommel nach einem der Ansprüche 1 bis 7, dadurch gekennzeichnet, daß sich unterhalb der Antriebstrommel eine zur Trommelachse parallele, den Antriebsmotor (21) tragende, mit einem Ende am Gerüst (15) drehbeweglich befestigte Traverse (12) erstreckt.

9. Antriebstrommel nach einem der Ansprüche 1 bis 8, dadurch gekennzeichnet, daß der Antriebsmotor um eine zur Trommelachse parallele Achse (30) schwenkbar an der Traverse befestigt ist.

10. Antriebstrommel nach Anspruch 9, dadurch gekennzeichnet, daß der Antriebsmotor an einer Platte (28) befestigt ist, die kipp- oder schwenkbar zwischen zwei sich senkrecht zur Traverse erstreckenden und mit dieser verbundenen Stirn- oder Seitenblechen (27) angeordnet ist.
